# EUROPEAN PATENT APPLICATION

(11) **EP 4 789 921 A1**
(43) Date of publication of application: **12.08.2026**
(21) Application number: 25157138.6
(22) Date of filing: 11.02.2025
(51) Int. Cl.: B60R 1/27

(54) **A METHOD FOR PRESENTING A SURROUNDING IMAGE OF SURROUNDINGS OF A MOTOR VEHICLE WITH A VIRTUAL REPRESENTATION OF THE MOTOR VEHICLE DURING A START-UP PHASE, A COMPUTER PROGRAM PRODUCT, COMPUTER-READABLE STORAGE MEDIUM, AS WELL AS A SUPPORT SYSTEM**

(71) Applicant: Connaught Electronics Ltd., County Galway H54 Y276 (IE)
(72) Inventor: RAMACHANDRAN, Vishnu, 600130 Chennai, Tamil Nadu (IN); DAKSHAYANI, Akash, 560103 BANGALORE (IN); ANTONY, Arun, Tuam, H54 Y276 (IE); SUNIL, Sandeep, 600130 Chennai, Tamil Nadu (IN); SUBRAMANIAN, Muthukumar, 600130 Chennai, Tamil Nadu (IN); ANANTHAN, Alaiyarasan, 600130 Chennai, Tamil Nadu (IN); GHANDAM, Shanmukheswa-Rao, 600130 Chennai, Tamil Nadu (IN)
(74) Representative: Jauregui Urbahn, Kristian

(57) **Abstract**

The invention relates to a method for presenting a surrounding image of surroundings (14) of a motor vehicle (1) with a virtual representation of the motor vehicle (1) during a start-up phase of the motor vehicle (1) by a support system (3) of the motor vehicle (1), comprising the steps of providing a two-dimensional image (9) of the motor vehicle (1) as the virtual representation by an electronic computing device (5) of the support system (3); capturing the current surroundings (14) of the motor vehicle (1) by at least one capturing device (4) of the support system (3); blending the two-dimensional image (9) with the current captured surroundings (14) to the surrounding image by the electronic computing device (5); and presenting the surrounding image during the start-up phase on a display device (6) of the support system (3). Furthermore, the present invention relates to a computer program product, a computer-readable storage medium, as well as to a support system (3).

## Description

The present invention relates to a method for presenting a surrounding image of surroundings of a motor vehicle with a virtual representation of the motor vehicle during a start-up phase of the motor vehicle by a support system of the motor vehicle. Furthermore, the present invention relates to a corresponding computer program product, a corresponding computer-readable storage medium, as well as a corresponding support system.

When starting a motor vehicle with, for example, a so-called advanced driver assistance system (ADAS), there can be issues when the computing capacity of the system is impaired, particularly in creating a so-called bird's-eye-view image (BEV) during start-up. At start-up, the ADAS system must undergo several initialization processes before it becomes operational. This includes creating the BEV, where multiple sensors and cameras collect and process data to create a 360-degree view of the vehicle surroundings.

If the computing capacity of the system is impaired, it can slow down or even fail the BEV creation process. This can be due to high CPU usage from other system processes, insufficient memory resources, or slow harddrives. Another factor that can impact the BEV creation is errors in sensor data. When sensors collect data that is inaccurate or incomplete, it can result in a distorted or inaccurate BEV representation. In such cases, the system may need to allocate additional computing capacity to correct the data and create the BEV which can prolong the vehicle start-up time.

To minimize these issues, it is essential that vehicle with ADAS have sufficient computing capacity to meet their demands of BEV process and other system processes. This can be achieved through high-performance processors, more memory and fast harddrives. Additionally, sensors must be regularly maintained and calibrated to ensure they provide accurate and reliable data for BEV creation.

Furthermore, many ADAS systems utilize a so-called fixed three-dimensional model that represents the vehicle in the bird's-eye-view image, which is usually a low detailled bitmap of the actual ego model. This bitmap is not dynamically generated and remains the same regardless of the vehicle's configuration.

US 11491914 B2 relates to a method for providing an image representation of an environment of a vehicle, wherein the environment of the vehicle is captured at least partly, an image representation of at least one first part of the captured environment is provided within a defined viewport from a defined perspective, wherein the image representation includes a vehicle representation representing the vehicle, and wherein the image representation is displayed on a display device. Further, when providing the image representation at least one second part of the captured environment is represented in form of a mirrored image of the at least one second part of the environment on a defined region of the vehicle representation.

WO 2019154774 A1 relates to a method for displaying a scene from a certain point of view on a display device of a vehicle, wherein the scene comprising a vehicle model is provided, the certain point of view is set within the scene and the scene from the set certain point of view is displayed on the display device of the vehicle. Moreover, when providing the scene, the scene is provided together with at least one passenger model.

According to the state of the art, during a start-up process of the motor vehicle, generating a surrounding image needs a high computing resource in order to present the surrounding image with the motor vehicle. Therefore, this can lead to a very late representation of the surrounding image on the display device. Therefore, there is a need in the art to accelerate the presentation of the surrounding image on a display device.

It is an object of the present invention to provide a method, a computer program product, a corresponding computer-readable storage medium, as well as a corresponding support system, by which a representation of a surrounding image of the motor vehicle can be provided in an improved manner, in particular with less computing resources than in the state of the art.

This object is solved by a method, a corresponding computer program product, a corresponding computer-readable storage medium, as well as a corresponding support system according to the independent claims. Advantageous embodiments are presented in the dependent claims.

One aspect of the invention relates to a method for presenting a surrounding image of surroundings of a motor vehicle with a virtual representation of the motor vehicle during a start-up phase of the motor vehicle by a support system of the motor vehicle. A two-dimensional image of the motor vehicle is provided by an electronic computing device of the support system. The current surroundings of the motor vehicle are captured by at least one capturing device of the support system. The two-dimensional image is blended with the current captured surroundings to the surrounding image by the electronic computing device. The surrounding image is presented during the start-up phase on a display device of the support system.

Therefore, presenting the surrounding image with less needed computing resources is provided, as the two-dimensional image is used. Therefore, the method solves the problem of slow start-up times and high computational load in advanced driver assistance systems (ADAS) by introducing the method that eliminates the need for real-time rendering of the three-dimensional ego model during each start-up by generating and storing the two-dimensional image of the three-dimensional ego model during an initial setup of the motor vehicle.

In particular, by generating and storing the two-dimensional image of the three-dimensional ego motor vehicle during the initial setup or when changes are made, the support system can quickly retrieve and display this pre-rendered image during subsequent start-ups, significantly improving efficiency and responsiveness. Furthermore, during subsequent start-ups, the support system quickly retrieves this pre-rendered two-dimensional image from memory, instead of rendering it in real-time, and blends it with real-time data from the at least one capturing device to create an accurate surrounding image. This approach reduces start-up times, lowers the computational load, and provides a detailed and up-to-date view of the vehicle's surroundings, improving driver safety and system efficiency.

In particular, when the motor vehicle with the advanced driver assistance system starts up, the advanced driver assistance system goes through several initialization processes to prepare for operation. One of these processes is the capturing and processing of data from various sensors and cameras to create in particular a bird's-eye-view image (BEV) of the motor vehicle surroundings. During start-up, the ADAS activates its sensors and cameras such as radar, lidar, ultrasonic sensor, and cameras. These sensors collect data on the vehicle's surroundings, including other vehicles, pedestrians, obstacles, and road markings. The data is then processed by the ADAS to create the BEV of the environment.

However, this process can be resource-intensive and may consume significant computing capacity during start-up. If the system has insufficient computing resources or if other system processes are consuming a large portion of available resources, it can lead to performance issues or even failures in creating the BEV.

Another challenge with creating the BEV during start-up is ensuring that the sensor data is accurate and reliable. Inaccurate or inconsistent data from sensors can result in a distorted or incorrect BEV representation, which can negatively impact the ADAS's capability to assist the driver. To address these challenges, vehicle manufacturers have to ensure that their ADAS have sufficient computing capacity to handle the demands of creating the BEV during start-up. This may involve using high performance processors or dedicated hardware for sensor data processing. Additionally, it is essential to regularly maintain and calibrate sensors to ensure accurate and reliable data collection, which can help reduce the computational burden on the system.

In particular, the start-up process of the motor vehicle with the advanced driver assistance system refers to the series of steps that occur from the moment the vehicle is turned on until it becomes fully operational and ready for use. The start-up process typically begins when the driver turns the ignition switch or presses the start button, which activates the vehicle's electrical system. The engine control unit (ECU) then performs a series of diagnostic checks to ensure that all critical systems are functioning properly. This includes checking the battery voltage, verifying the status of various sensors and actuators, and ensuring that the power train is ready for operation. Once these initial diagnostics are complete, the ADAS begins its initialization process. This involves activating various sensors and cameras, such as radar, lidar, ultrasonic sensors and cameras to capture data on the vehicle's surroundings. The data is then processed by the ADAS to create the bird's-eye view image of the environment. During this initialization process, the ADAS may also perform self-calibration routines to ensure that its sensors and cameras are aligned correctly and function properly. This can involve adjusting the position or orientation of sensors or recalibrating camera lenses.

The start-up process typically ends when the motor vehicle is fully operational and ready for use, which usually occurs after the ADAS has completed its initialization and self-calibration routines. At this point, the driver may receive a notification or audible alert indicating that the system is ready to assist them with driving tasks.

It is important to note that the duration of the start-up process can vary depending on the specific vehicle and model as well as the complexity of the ADAS. In some cases, the start-up process may take several minutes while in other cases it may be nearly instantaneous. However, regardless of the duration, it is essential to ensure that the system is functioning properly and accurately capturing data on the vehicle's surroundings to provide safe and reliable assistance to the driver.

According to an embodiment, the surrounding image is presented as a bird's-eye-view image. The so-called bird's-eye-view image (BEV) image is a 360-degree top-down view of a vehicle's surroundings. It provides an overhead perspective that allows drivers to see their vehicle's position and orientation in relation to other objects, such as nearby vehicles, pedestrians, obstacles, and road markings. BEV images are often generated using data from multiple sensors and cameras mounted on the motor vehicle. This data is then processed by a computer system to create a single, unified image that represents the vehicle's surroundings in real-time. The resulting BEV image provides drivers with a clear and intuitive view of their environment, which can be particularly useful in situations where visibility may be limited, such as in heavy traffic or poor weather conditions. BEV images are often used in advanced driver assistance systems to assist drivers with various driving tasks, such as parking, lane changing, navigation intersections. They can also provide valuable information for autonomous driving systems, allowing them to make safe and informed decisions about the vehicle's movement. BEV images are typically displayed on a dashboard monitor or head-up display (HUD) providing drivers with an easy-to-understand visual representation of their surroundings. The use of BEV images in ADAS and autonomous driving systems can help improve safety, reduce accidents, and enhance the overall driving experience.

In another embodiment, at least the color of the motor vehicle is represented in the two-dimensional image. In particular, the two-dimensional image is generated by using a three-dimensional image, which may be generated during the initial start-up process of the motor vehicle. The 3D-model may comprise at least the color of the motor vehicle. The two-dimensional image also uses the color in order to provide an improved two-dimensional image for the driver during the start-up process.

In another embodiment, at least textures and/or surface properties of the motor vehicle are represented in the two-dimensional image. In particular, therefore materials of the motor vehicle may be provided within the two-dimensional image. The textures and surface properties applied to the three-dimensional model of the motor vehicle are provided to simulate real-world appearances. Therefore, an improved visualization of the motor vehicle can be provided.

In another embodiment, at least a model variation and/or an individual feature of the motor vehicle are represented in the two-dimensional image. Therefore, also specific settings and adjustments that define the vehicle's model variations and features are also presented in the surrounding image. Therefore, individual representation of the surroundings can be provided.

In another embodiment, the two-dimensional image is derived from a three-dimensional image of the motor vehicle. In particular, the three-dimensional model/image of the motor vehicle is rendered into the two-dimensional image, in particular in a so-called car bitmap, capturing the top view of the motor vehicle with details like color and reflections. In particular, the two-dimensional representation is already stored in a memory of the electronic computing device. Therefore, the two-dimensional image can be derived from that stored image in an improved manner. This image can then be used to quickly start-up the motor vehicle during the start-up phase.

In another embodiment, after the start-up phase of the motor vehicle the two-dimensional image is replaced by a three-dimensional image/model of the motor vehicle. Therefore, when the start-up phase is finished, the three-dimensional model can replace the two-dimensional image. Therefore, the surrounding image can be provided with the three-dimensional model of the motor vehicle. For example, zooming in or zooming out of the motor vehicle can be provided with the three-dimensional model. Also a perspective change can be provided with the three-dimensional image. Therefore, a more intuitive operation of the support system is provided.

In another embodiment, the two-dimensional image is presented with a vehicle specific bounding box. In particular, the two-dimensional image is overlaid onto a bounding box match that represents the vehicle's footprint in the surrounding view image, in particular in the bird's-eye view mode.

According to another embodiment, the two-dimensional image is stored in a non-volatile memory of the electronic computing device. In particular, the non-volatile memory is, in particular, so-called NAND-memory. The NAND-memory is type of non-volatile flash memory that is commonly used for data storage in various electronic devices, in particular in motor vehicles. NAND-memory differs from other types of flash memory, such as NOR memory, in its structure and operation. NAND-memory cells are arranged in grid-like pattern, with each cell consisting of a floating gate transistor that can store a single bit of data. Data is written to and read from the memory cells by applying electrical charges to the gates which alter the state of the transistors. One of the main advantages of NAND-memory is its high storage density, meaning that it can store large amounts of data in a small space. This makes it an ideal choice for devices that require high-capacity storage, such as storing the two-dimensional image from the motor vehicle. Additionally, NAND-memory is relatively fast, allowing for quick read and write times which is important for applications that require rapid access to data.

In another embodiment, the current surroundings are captured with a fish-eye camera as the capturing device. The fish-eye camera can be used as one of the sensors to capture data for creating the bird's-eye-view image in an advanced driver assistance system. The fish-eye lens using this type of camera has a very wide field of view, typically around 180 degrees or more. This allows it to capture a much larger area than a standard camera, making it ideal for capturing data from multiple lanes and road surfaces simultaneously. However, the use of a fish-eye lens can introduce distortion into the captured image, particularly at the edges of the frame. To address this issue, computer algorithms are typically used to correct the distortion in the fish-eye camera image before it is combined with data from other sensors to create the BEV image. This involves mapping the curved surface of the fish-eye lens onto a flat plane which can straighten up the disordered edges and provide a more accurate representation of the vehicle's surroundings.

In particular, the present invention is a computer-implemented method. Therefore, another aspect of the invention relates to a computer program product comprising program code means for performing a method according to the preceding aspect.

Furthermore, the present invention relates to a computer-readable storage medium comprising at least the computer program product according to the preceding aspect.

A still further aspect of the invention relates to a support system for presenting a surrounding image of surroundings of a motor vehicle with a virtual representation of the motor vehicle during a start-up phase of the motor vehicle, comprising at least one electronic computing device, one capturing device, and one display device, wherein the support system is configured for performing a method according to the preceding aspect. In particular, the method is performed by the support system.

A still further aspect of the invention relates to a motor vehicle comprising at least the support system according to the preceding aspect. Furthermore, the motor vehicle can also be provided with an assistance system for an at least in part automatically operation or a fully automatically operation.

Advantageous embodiments of the method are to be regarded as advantageous embodiments of the computer program product, the computer-readable storage medium, the support system, as well as the motor vehicle. The support system as well as the motor vehicle therefore comprise means for performing the method.

In particular, a computing unit/electronic computing device can include one or more computers, one or more microcontrollers and/or one or more integrated circuits, for example one or more application-specific integrated circuits, ASIC, one or more field-programmable gate arrays, FPGA, and/or one or more systems on a chip, SoC. The computing unit can also include one or more processors, for example one or more microprocessors, one or more central processing units, CPU, one or more graphics processing units, GPU, and/or one or more signal processors, in particular one or more digital signal processors, DSP. The computing unit can also include a physical or virtual cluster of computers or others of the mentioned units.

A computing unit/electronic computing device can also include one or more hardware and/or software interfaces and/or one or more storage units. Therein, a storage unit can be designed as a volatile data memory, for example as a dynamic random access memory, DRAM, or static random access memory, SRAM, or as a non-volatile data memory, for example as a read-only memory, ROM, as a programmable read-only memory, PROM, as an erasable programmable read-only memory, EPROM, as an electrically erasable programmable read-only memory, EEPROM, as a flash memory or flash EEPROM, as a ferroelectric random access memory, FRAM, as a magnetoresistive random access memory, MRAM, or as a phase-change random access memory, PCRAM.

Advanced Driver-Assistance Systems (ADAS) according to this invention are sophisticated electronic systems designed to enhance vehicle safety and driver convenience. These systems consist of various technical components, including sensors, cameras, radar, lidar, actuators, and control units. Sensors play a crucial role in detecting the environment around the vehicle. They include ultrasonic sensors, cameras, radar, and lidar. Ultrasonic sensors use sound waves to measure distances to nearby objects, while cameras capture images of the road and surrounding area. Radar and lidar use radio or light waves, respectively, to detect objects at longer ranges and with higher precision. ADAS control units/electronic computing device process sensor data and make decisions based on that information. They typically consist of a microcontroller, memory, input/output interfaces, and communication protocols. The control unit receives data from the sensors, processes it using algorithms and machine learning techniques, and then sends commands to the actuators to take appropriate actions. Actuators are devices that convert electrical signals into physical movements or actions. They include electric motors, solenoids, and hydraulic or pneumatic systems. For example, an electric motor can adjust the steering angle, while a solenoid can control the brakes or throttle position. A user interface provides feedback to the driver about the status of the ADAS. It includes visual displays, audible alerts, and haptic feedback. Visual displays show information on dashboard screens, while audible alerts use sounds or voice messages to warn the driver of potential hazards. Haptic feedback can include steering wheel vibrations or seat pulses to alert the driver of danger. ADAS rely on communication protocols to transmit data between components. Common protocols include CAN (Controller Area Network), LIN (Local Interconnect Network), and Ethernet. These protocols allow different components to communicate with each other, ensuring that the ADAS functions as intended. Modern ADAS use machine learning algorithms to improve their performance over time. These algorithms analyze sensor data and learn from it, allowing the system to adapt to changing conditions and improve its accuracy. In summary, an ADAS consists of various technical components, including sensors, control units, actuators, user interfaces, communication protocols, and machine learning algorithms. By combining these elements, ADAS can help improve vehicle safety, reduce accidents, and enhance the driving experience.

For application cases or application situations, which can arise in a method according to the invention and which are not explicitly described herein, it can be provided that an error message and/or a request for inputting a user feedback are output and/or a default setting and/or a predetermined initial state are adjusted according to the method.

Further features of the invention are apparent from the claims, the figures and the description of figures. The features and feature combinations mentioned above in the description as well as the features and feature combinations mentioned below in the description of figures and/or shown in the figures can be encompassed by the invention not only in the respectively specified combination, but also in other combinations. In particular, implementations and feature combinations can also be encompassed by the invention, which do not comprise all of the features of an originally formulated claim. Moreover, implementations and feature combinations can be encompassed by the invention, which extend beyond or deviate from the feature combinations set forth in the relations of the claims.

Therefore, the figures show in:
- Fig. 1: a schematic top view according to an embodiment of a motor vehicle comprising an embodiment of a support system;
- Fig. 2: a schematic block diagram according to an embodiment of the method;
- Fig. 3: another schematic block diagram according to an embodiment of the method;
- Fig. 4: a schematic flow chart according to an embodiment of the method;
- Fig. 5: another schematic flow chart according to an embodiment of the method; and
- Fig. 6: another schematic flow chart according to an embodiment of the method.

In the figure the same elements are presented with the same reference signs.

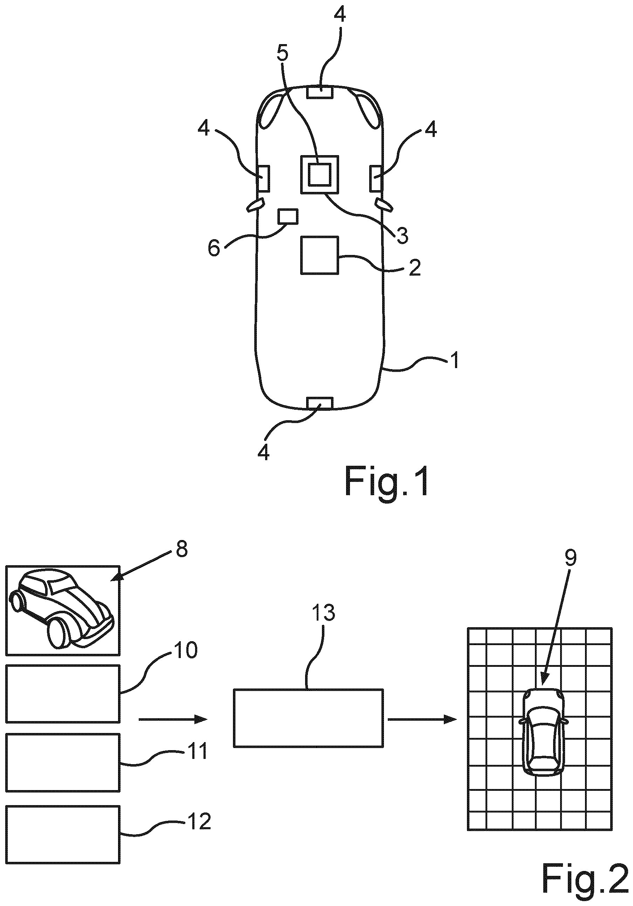

Fig. 1 shows a schematic top view according to an embodiment of a motor vehicle 1. The motor vehicle 1 comprises an assistance system 2, which may be also regarded as a so-called advanced driver assistance system (ADAS). The assistance system 2 may be, for example, configured for supporting the motor vehicle 1 in a driving operation, for example in an at least in part automatically driving operation. Furthermore, the motor vehicle 1 may comprise a support system 3. The support system 3 may support a driver of the motor vehicle 1 during a driving operation, for example during operation of the at least in part automated driving operation of the motor vehicle 1. The support system 3 therefore comprises at least one capturing device 4. In the shown embodiment, the support system 3 comprises four capturing devices 4, in particular four cameras. The capturing devices 4 are arranged at different sides of the motor vehicle 1.

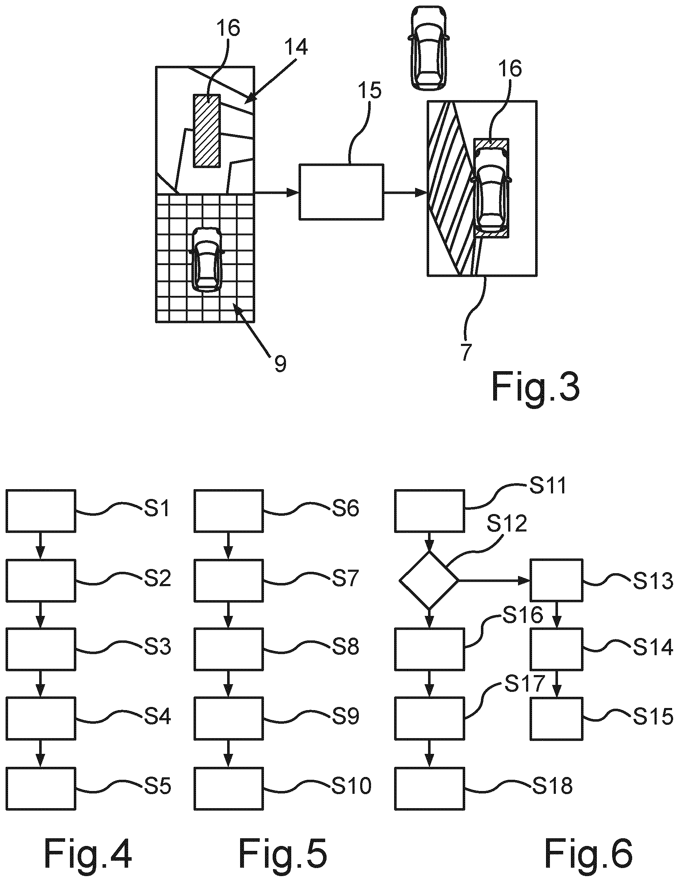

Furthermore, the support system 3 comprises at least one electronic computing device 5 and one display device 6. The display device 6 is configured for at least presenting a so-called bird's-eye-view image 7 (Fig. 3).

In particular, the proposed invention solves the problem of slow start-up times and high computational load in the assistance system 2 by introducing a method that eliminates the need for real-time rendering of a three-dimensional image 8 (Fig. 2) during each start-up. By generating and storing the two-dimensional image 9 (Fig. 2) of the three-dimensional image 8 during the initial setup or when changes are made, the support system 3 can quickly retrieve and display this pre-rendered image during subsequent start-ups, and therefore significantly improving efficiency and responsiveness.

Fig. 2 shows therefore a schematic block diagram according to a first step of the method. In particular, Fig. 2 shows how the two-dimensional image 9 is generated derived from the three-dimensional image/model 8. In particular, when the assistance system 2 is powered on for the first time, after a system reset, or when there are changes in the motor vehicle's model or color, the support system 3 retrieves the vehicle's three-dimensional image 8. The three-dimensional image 8 is rendered into the two-dimensional image 9, capturing the top view of the motor vehicle 1 with details like color and reflections. Therefore, as shown in Fig. 2, materials 10, configurations 11 and parameters 12, like color, are also used to generate the two-dimensional image 9. By using a so-called graphic pipeline 13, the two-dimensional image 9 is generated.

In particular, the three-dimensional image 8 is a complete digital representation of the motor vehicle 1, including its shape and structure. Materials 10 are, for example, textures and surface properties applied to the three-dimensional image 8 to simulate real-world appearances. Configurations 11 are specific settings and adjustments that define the vehicle's model variations and features. Parameters 12 like color are attributes such as paint color and a finish that personalize the appearance of the motor vehicle 1. The graphic pipeline 13 is a series of processing steps that convert the three-dimensional image 8 and its attributes into the two-dimensional image 9. The two-dimensional image 9 is the final two-dimensional image 9 generated from the three-dimensional image 8, representing the top view of the motor vehicle 1.

Fig. 3 then shows another block diagram according to an embodiment of the method. In particular, Fig. 3 shows how the bird's-eye-view image 7, in particular the surrounding image, is generated. In particular, surroundings 14 are captured with the capturing device 4. The two-dimensional image 9 is provided. A blending process 15 is provided, wherein the two-dimensional image 9 is blended with the captured surroundings 14 to the surrounding image, in particular the bird's-eye-view image 7. The surrounding image is then presented during the start-up phase on the display device 6.

Therefore, Fig. 3 shows in particular the method for presenting the surrounding image of the surroundings 14 of the motor vehicle 1 with a virtual representation of the motor vehicle 1 during a start-up phase of the motor vehicle 1 by the support system 3. The two-dimensional image 9 is provided as the virtual representation by the electronic computing device 5. The current surroundings 14 are captured by at least the one capturing device 4. The two-dimensional image 9 is blended with the current captured surroundings 14 to the surrounding image by the electronic computing device 5.

In particular, after the start-up phase of the motor vehicle 1, the two-dimensional image 9 is replaced by the three-dimensional image 8 of the motor vehicle 1. Furthermore, as shown, the two-dimensional image 9 is generated with a vehicle specific bounding box 16.

Furthermore, the two-dimensional image 9 is stored in non-volatile memory of the electronic computing device 5.

As already mentioned, the current surroundings 14 are in particular captured with a fish-eye camera as the capturing device 4.

Therefore, Fig. 3 shows that the merged top view image is created from the input from the fish-eye camera, providing a comprehensive overhead perspective of the vehicle's surroundings 14. The two-dimensional image 9 is used from the non-volatile memory. Therefore, the pre-rendered two-dimensional image 9 of the motor vehicle 1 can be retrieved from the non-volatile memory. The step, where the pre-rendered two-dimensional image 9 is overlaid into the initial rendered top view is in particular the so-called blending process 15 to enhance the visual accuracy and details. The final output may be the combined image that merged the captured surroundings 14, in particular in the bird's-eye view from the fish-eye camera with the two-dimensional image 9 for a detailed and accurate overhead representation of the motor vehicle 1 and its surroundings 14.

Fig. 4 shows a schematic flow chart according to an embodiment of the method, in particular according to an embodiment of the method of Fig. 2. In a first step S1 the method starts. In a second step S2, retrieving the three-dimensional image 8 is provided. In a third step S3 rendering the two-dimensional image 9 is provided. In a fourth step S4, the two-dimensional image 9 is stored in the non-volatile memory. In a fifth step S5, the method ends.

Fig. 5 shows a schematic flow chart according to an embodiment of the method of Fig. 4. In particular, in a sixth step S6, the method starts. In a seventh step S7, a subsequent restart of the motor vehicle 1 is determined. In an eighth step S8, retrieving the two-dimensional image 9 from the non-volatile memory is provided. In a ninth step S9, the surrounding image is displayed on the display device 6. In a tenth step S10, the method ends.

Fig. 6 shows another schematic flow chart according to an embodiment of the invention. In particular, Fig. 6 shows in an eleventh step S11 that the method starts. In a twelfth step S12 it is checked if a hash value is the same. If yes, a thirteenth step S13 is provided, wherein an TGA image from the memory is read. In a fourteenth step S14, the TGA file to texture is read. In a fifteenth step S15, a texture is passed as uniformed to a fragment shader and rendered in a default frame buffer.

Coming from the twelfth step S12 and if the hash value is not the same, a sixteenth step S16 is provided wherein the color buffer from a so-called RTT is read. In a seventeenth step S17, a car model with bounding boxes 16 is calculated. In an eighteenth step S18, the RGBA is converted to a BGRA, and this is saved in the TGA format in the memory.

In particular, Fig. 6 shows that the assistance system 2 and/or the support system 3 initially checks the availability of the two-dimensional image 9 in the non-volatile memory.

Normally, when the two-dimensional image 9 is generated when the new car model is flashed. This implementation uses render to texture (RTT) to render the bird's-eye-view image car model alone in the color buffer. This may avoid other models getting read while reading from the default frame buffer. After rendering the car model in the RTT, the condition for the first frame rendering is checked. If it is a first-frame rendering, then the content of the color buffer is read from the currently bound frame buffer. The car model is rendered with BEV view port parameters, so to extract the car model alone, the bounding box 16 for the rendered car model alone is calculated, which helps it in reducing the pixel count, which reduces the file size written to the memory. After extracting the car model pixel, the pixel format is changed to BGRA, encoded into TGA format, and written to the non-volatile memory.

During the subsequent rendering, the availability of the car bitmap is checked and read. From the TGA header, the meta data of the images were extracted, and with that the car model can be loaded into texture. This texture is passed as a uniform to the fragment shader and rendered in the default frame buffer.

In particular the Fig. 1 to 6 show an efficient BEV Rendering with dynamic 2D car bitmap generation in ADAS.

## Claims

1. A method for presenting a surrounding image of surroundings (14) of a motor vehicle (1) with a virtual representation of the motor vehicle (1) during a start-up phase of the motor vehicle (1) by a support system (3) of the motor vehicle (1), comprising the steps of:
- providing a two-dimensional image (9) of the motor vehicle (1) as the virtual representation by an electronic computing device (5) of the support system (3);
- capturing the current surroundings (14) of the motor vehicle (1) by at least one capturing device (4) of the support system (3);
- blending the two-dimensional image (9) with the current captured surroundings (14) to the surrounding image by the electronic computing device (5); and
- presenting the surrounding image during the start-up phase on a display device (6) of the support system (3).

2. A method according to claim 1,
**characterized in that**
the surrounding image is presented as a birds-eye-view image (7).

3. A method according to claim 1 or 2,
**characterized in that**
at least a color of the motor vehicle (1) is represented in the two-dimensional image (9).

4. A method according to any one of claims 1 to 3,
**characterized in that**
at least textures and/or surface properties of the motor vehicle (1) are represented in the two-dimensional image (9).

5. A method according to any one of claims 1 to 4,
**characterized in that**
at least a model variation and/or an individual feature of the motor vehicle (1) are represented in the two-dimensional image (9).

6. A method according to any one of claims 1 to 5,
**characterized in that**
the two-dimensional image (9) is derived from a three-dimensional image (8) of the motor vehicle (1).

7. A method according to any one of claims 1 to 6,
**characterized in that**
the two-dimensional image (9) is a top-view representation of the motor vehicle (1).

8. A method according to any one of claims 1 to 7,
**characterized in that**
after the start-up phase of the motor vehicle (1) the two-dimensional image (9) is replaced by a three-dimensional image (8) of the motor vehicle (1).

9. A method according to any one of claims 1 to 8,
**characterized in that**
the two-dimensional image (9) is generated during a first start-up of the motor vehicle (1) and/or after an update of the support system (3).

10. A method according to any one of claims 1 to 9,
**characterized in that**
the two-dimensional image (9) is presented with a vehicle specific bounding box (16).

11. A method according to any one of claims 1 to 10,
**characterized in that**
the two-dimensional image (9) is stored in a non-volatile memory of the electronic computing device (5).

12. A method according to any one of claims 1 to 11,
**characterized in that**
the current surroundings (14) are captured with a fish-eye camera as the capturing device (4).

13. A computer program product comprising program code means for performing a method according to any one of claims 1 to 12.

14. A computer-readable storage medium comprising at least the computer program product according to claims 13.

15. A support system (3) for presenting a surrounding image of surroundings (14) of a motor vehicle (1) with a virtual representation of the motor vehicle (1) during a start-up phase of the motor vehicle (1), comprising at least one electronic computing device (5), one capturing device (4), and one display device (6), wherein the support system (3) is configured for performing a method according to any one of claims 1 to 12.
